# EUROPÄISCHE PATENTANMELDUNG

(11) **EP 2 863 011 A1**
(43) Veröffentlichungstag der Anmeldung: **22.04.2015**
(21) Anmeldenummer: 13188905.7
(22) Anmeldetag: 16.10.2013
(51) Int. Cl.: F01D 5/18

(54) **Turbinenschaufel, zugehörige Stator, Turbine und Kraftwerksanlage**

(71) Anmelder: Siemens Aktiengesellschaft, 80333 München (DE)
(72) Erfinder: Ahmad, Fathi, 41564 Kaarst (DE); Buchal, Tobias, Dr., 40489 Düsseldorf (DE); Koch, Daniela, 45130 Essen (DE); Schüler, Marco, 45144 Essen (DE); Nihal, Kurt, 40231 Düsseldorf (DE); Radulovic, Radan, Dr., 44799 Bochum (DE)

(57) **Zusammenfassung**

Eine Turbinenschaufel (120, 130) für eine Turbine (100) mit einer Plattform (146, 160), an der ein im Querschnitt profiliertes Schaufelblatt (144) angeordnet ist, wobei auf der dem Schaufelblatt (144) abgewandten Seite der Plattform (146, 160) ein Hohlraum (174) gebildet ist, der von der Plattform (146, 160), einer im Wesentlichen parallel dazu angeordneten Prallplatte (168) und einer Randumfassung (162, 164) begrenzt ist, wobei der Hohlraum (174) durch eine Rippe (166) unterteilt ist, soll vermittels technisch einfacher Maßnahmen eine höhere Lebensdauer aufweisen. Dazu ist die Rippe (166) ein Teil der Prallplatte (168). Zugehörige Stator, Turbine und Kraftwerksanlage werden ebenfalls präsentiert.

## Beschreibung

Die Erfindung betrifft eine Turbinenschaufel für eine Turbine mit einer Plattform, an der ein im Querschnitt profiliertes Schaufelblatt angeordnet ist, wobei auf der dem Schaufelblatt abgewandten Seite der Plattform ein Hohlraum gebildet ist, der von der Plattform, einer im Wesentlichen parallel dazu angeordneten Prallplatte und einer Randumfassung begrenzt ist, wobei der Hohlraum durch eine Rippe unterteilt ist.

Turbinenschaufeln der oben genannten Art dienen in Turbinen zur Umwandlung der Energie eines heißen Gasstroms in rotatorische Energie. Sie weisen typischerweise ein von Hohlräumen zur Führung von Kühlluft durchzogenes, in der Art einer Flugzeugtragfläche profiliertes Schaufelblatt auf, an das sich in Längsrichtung der Schaufel eine Plattform anschließt. An die Plattform schließt sich eine typischerweise in der Art einer Nut-Feder-Verbindung ausgestaltete Befestigung an. Die Plattform dient zur Abdichtung des Befestigungsbereichs gegen das in der Turbine strömende Heißgas.

Solche Turbinenschaufeln sind erheblichen thermischen Belastungen durch den heißen Gasstrom ausgesetzt. Sie müssen daher gekühlt werden. Im Bereich der Plattform ist hierzu üblicherweise mit einem Abstand eine Prallplatte angeordnet, so dass sich hier ein flächiger Hohlraum bildet. Die Prallplatte wird mit Kühlluft beaufschlagt, so dass durch Konvektion im Hohlraum die Plattform gekühlt wird. Um hierbei eine Vermischung von Kühlluft zu vermeiden und eine gleichmäßigere Kühlung besonders stark belasteter Bereiche zu gewährleisten, ist der Hohlraum dabei durch Rippen unterteilt. Diese sind typischerweise als Teil der Plattform im Gießprozess der Turbinenschaufel direkt mit eingebracht, wie dies z. B. aus der DE 10 2009 025 796 A1 bekannt ist.

Nachteilig hierbei ist jedoch, dass es durch die Rippen zu einer Versteifung der Plattform kommt, was aufgrund des Steifigkeitsunterschieds zum Schaufelblatt im Betrieb der Turbine zu einer Rissbildung im Übergangsbereich zwischen Plattform und Schaufelblatt führen kann. Dies reduziert die Lebensdauer der Turbinenschaufel.

Es ist daher Aufgabe der Erfindung, eine Turbinenschaufel der eingangs genannten Art anzugeben, die vermittels technisch einfacher Maßnahmen eine höhere Lebensdauer aufweist.

Diese Aufgabe wird erfindungsgemäß dadurch gelöst, dass die Rippe ein Teil der Prallplatte ist.

Die Erfindung geht dabei von der Überlegung aus, dass die derzeit vorhandene Unterteilung des Hohlraums in einzelne Kammern durch die einteilig mit der Plattform gebildeten Rippen vergleichsweise große Kontaktkräfte weiter verteilen, was in hohen Zugbelastungen resultiert. Die Steifheit der Plattform wird dadurch zudem erhöht, wodurch Risse im Übergangsbereich zum Schaufelblatt entstehen. Die Rippen wirken sich daher negativ auf die Lebensdauer der Turbinenschaufel aus. Ein Entfallen der Rippen ist jedoch ebenso negativ, da hierdurch die Unterteilung des Hohlraums aufgehoben würde und eine Vermischung von Kühlluft die Folge wäre, was die Kühlung stark belasteter Teile der Plattform verschlechtert. Um trotz der notwendigen Rippen dennoch eine Entkopplung der Kräfte zu erreichen, sollten diese daher nicht einteilig mit der Plattform gebildet sein, sondern vielmehr separat ausgebildet werden. Hierbei kann sich jedoch ein höherer Fertigungsaufwand ergeben, da die Rippen separat hergestellt und eingesetzt werden müssten. Dies ist vermeidbar, indem die Rippen Teil der Prallplatte sind, die an der Plattformrückseite angebracht ist. So sind sie an der Prallplatte fixiert und können direkt mit dieser eingebaut werden.

Die jeweilige Rippe könnte dabei separat gefertigt werden und dann durch beliebige Verfahren an der Prallplatte vor dem Einbau form-, stoff- oder kraftschlüssig befestigt werden. In besonders einfacher vorteilhafter Ausgestaltung ist die Rippe jedoch mit der Prallplatte einstückig ausgebildet. Sie wird also direkt bei der Herstellung der Prallplatte mit dieser zusammen geformt, beispielsweise durch Ausstanzen, wenn die Prallplatte als Blech ausgebildet ist, oder durch Gießen bei massiveren Ausführungen. Die Rippe oder die Rippen bilden dabei eine erhabene Struktur der Prallplatte auf deren der Plattform zugewandten Seite.

In weiterer vorteilhafter Ausgestaltung sind alle den Hohlraum unterteilenden Rippen Teil der Prallplatte. Mit anderen Worten: Jede Rippe, die den Hohlraum in mehrere Kammern unterteilt, ist Teil der Prallplatte und nicht mehr der Plattform. Alle unterteilenden Rippen der Plattform entfallen damit, wodurch eine maximale Reduktion der Steifigkeit der Plattform erreicht wird, und eine Zugkraftübertragung unterbunden wird. Die gewonnene Flexibilität reduziert die Rissbildung im Übergangsbereich zwischen Plattform und Schaufelblatt maximal.

Die Randumfassung des Hohlraums ist hingegen vorteilhafterweise ein Teil der Turbinenschaufel, d. h. sie ist Teil der Plattform und nicht der Prallplatte. Hierdurch wird gewährleistet, dass die Turbinenschaufel stabil befestigt werden kann und für die Prallplatte ein stabiler Sitz gegeben ist. Ein erster Teil der Randumfassung umzieht dabei einmal die Außenkontur der Plattform, ein zweiter Teil der Randumfassung umschließt das darin angeordnete Profil des Schaufelblatts.

Vorteilhafterweise ist die Randumfassung dabei mit der Turbinenschaufel einstückig ausgebildet. Bei typischerweise gegossenen Turbinenschaufeln ist sie somit direkt im Gießprozess mit eingebracht. Dadurch ergibt sich eine besonders hohe Stabilität der Randumfassung.

In vorteilhafter Ausgestaltung ist die Turbinenschaufel dabei als Leitschaufel ausgebildet. Gerade bei Leitschaufeln treten die beschriebenen Risse auf, so dass die Ausbildung der Rippen an der Prallplatte hier besonders effektiv die Rissbildung verhindert. Leitschaufeln können zudem auf beiden Längsseiten des Schaufelblatts eine beschriebene Plattform aufweisen, einmal zur Befestigung am Außengehäuse und einmal zur Befestigung an einem die Turbinenwelle umschließenden Innenring.

Ein Stator oder Rotor für eine Turbine umfasst vorteilhafterweise eine derartige Turbinenschaufel als Leit- bzw. Laufschaufel. Hierbei kann die Turbinenschaufel sowohl im Verdichter als auch in der Turbine zum Einsatz kommen.

Grundsätzlich ist die beschriebene Ausgestaltung für jede Schaufel anwendbar, die aufgrund hoher thermischer Belastung eine Prallkühlung benötigen. In besonders vorteilhafter Ausgestaltung des Stators oder Rotors ist die Turbinenschaufel jedoch in der Turbine angeordnet und ist der der Brennkammer am nächsten liegenden Schaufelreihe zugeordnet. Direkt nach der Brennkammer sind die Temperaturbelastungen nämlich am größten, so dass die beschriebene Ausgestaltung der Turbinenschaufel hier die größten Vorteile hinsichtlich der Lebensdauer bietet.

Eine Turbine umfasst vorteilhafterweise einen derartigen Stator und/oder Rotor.

Vorteilhafterweise ist die Turbine dabei als Gasturbine ausgelegt. Gerade in Gasturbinen sind die thermischen und mechanischen Belastungen besonders hoch, so dass die beschriebene Ausgestaltung der Turbinenschaufel besondere Vorteile hinsichtlich der Kühlung und damit auch des Wirkungsgrads bietet.

Eine Kraftwerksanlage umfasst vorteilhafterweise eine derartige Turbine.

Die mit der Erfindung erzielten Vorteile bestehen insbesondere darin, dass durch den Transfer der bislang an der Plattform angeordneten Rippen zur Unterteilung des rückseitigen Hohlraums auf die diesen begrenzende Prallplatte eine Rissbildung durch die Reduktion der Steifigkeit der Plattform vermindert wird. Dies erhöht die Lebensdauer und führt zu geringerem Verschleiß und reduziertem Wartungsaufwand. Gleichzeitig erfordert diese Maßnahme vergleichsweise geringen technischen Aufwand und erlaubt eine kostengünstige Realisierung der genannten Vorteile. In der Tat reduziert der Entfall der Rippen in der Schaufelplattform sogar die Kosten und es wird zudem deren Gewicht reduziert. Die Verbesserung der Stabilität macht es möglich, die Dicke der Beschichtung der Schaufel zu reduzieren. Die erhöhte Flexibilität in der Formgebung der Prallplatten macht es zudem möglich, weitere Modifikationen zur Verbesserung der Kühlung einzubringen. Die so gebildete Turbinenschaufel ist auch problemlos nachrüstbar.

Ein Ausführungsbeispiel der Erfindung wird anhand einer Zeichnung näher erläutert. Darin zeigen:
- FIG 1: einen teilweisen Längsschnitt durch eine Gasturbine,
- FIG 2: eine perspektivische Ansicht einer Leitschaufel nach dem Stand der Technik aus einer ersten Längsrichtung des Schaufelblatts,
- FIG 3: eine perspektivische Ansicht der Leitschaufel aus FIG 2 aus der entgegengesetzten Längsrichtung des Schaufelblatts,
- FIG 4: die perspektivische Ansicht aus FIG 2 ohne Bezugszeichen, jedoch mit schraffierter Darstellung der Spannungsbelastung,
- FIG 5: die perspektivische Ansicht aus FIG 3 ohne Bezugszeichen, jedoch mit schraffierter Darstellung der Spannungsbelastung,
- FIG 6: eine perspektivische Ansicht der Leitschaufel nach dem Stand der Technik zusammen mit einer Prallplatte nach dem Stand der Technik,
- FIG 7: eine perspektivische Ansicht einer Leitschaufel ohne Rippen zur Unterteilung des Hohlraums im Rückbereich der Plattform zusammen mit einer Prallplatte mit Rippen, und
- FIG 8: eine perspektivische Ansicht einer Prallplatte nach dem Stand der Technik zusammen mit einer Prallplatte mit Rippen.

Gleiche Teile sind in allen Figuren mit denselben Bezugszeichen versehen.

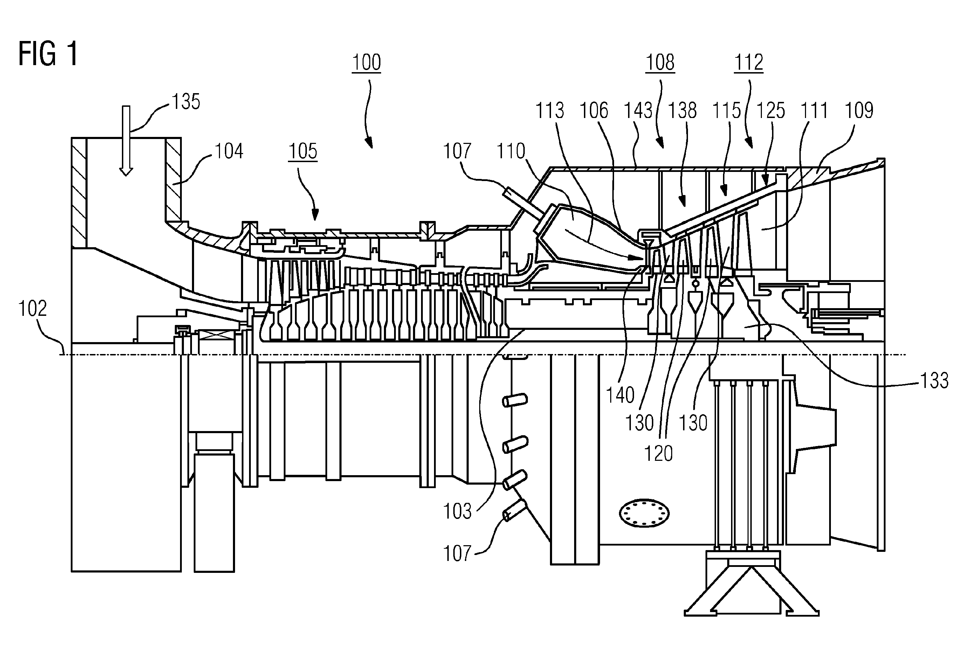

Die FIG 1 zeigt eine Turbine 100, hier eine Gasturbine, in einem Längsteilschnitt. Eine Turbine 100 ist eine Strömungsmaschine, welche die innere Energie (Enthalpie) eines strömenden Fluids (Flüssigkeit oder Gas) in Rotationsenergie und letztlich in mechanische Antriebsenergie umwandelt.

Die Gasturbine 100 weist im Inneren einen um eine Rotationsachse 102 (Axialrichtung) drehgelagerten Rotor 103 auf, der auch als Turbinenläufer bezeichnet wird. Entlang des Rotors 103 folgen aufeinander ein Ansauggehäuse 104, ein Verdichter 105, eine torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem ringförmigen Heißgaskanal 111. Dort bilden beispielsweise vier hintereinander geschaltete Turbinenstufen 112 die Turbine 108. Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125. Die Schaufeln 120, 130 sind leicht gekrümmt profiliert, ähnlich einer Flugzeugtragfläche.

Die Leitschaufeln 130 sind dabei am Stator 143 befestigt, wohingegen die Laufschaufeln 120 einer Reihe 125 mittels einer Turbinenscheibe 133 am Rotor 103 angebracht sind. Die Laufschaufeln 120 bilden somit Bestandteile des Rotors oder Läufers 103. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und Laufschaufeln 120.

Dem Fluidstrom wird durch die möglichst wirbelfreie laminare Umströmung der Turbinenschaufeln 120, 130 ein Teil seiner inneren Energie entzogen, der auf die Laufschaufeln 120 der Turbine 108 übergeht. Über diese wird dann der Rotor 103 in Drehung versetzt, wodurch zunächst der Verdichter 105 angetrieben wird. Die nutzbare Leistung wird an die nicht dargestellte Arbeitsmaschine abgegeben.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet. Die hohen Belastungen machen höchstbelastbare Werkstoffe erforderlich.

Die Turbinenschaufeln 120, 130 werden daher aus Titan-Legierungen, Nickel-Superlegierung oder Wolfram-Molybdän-Legierungen gegossen. Die Schaufeln werden für höhere Resistenz gegen Temperaturen so wie Erosion wie zum Beispiel Lochfraß, auch bekannt unter "pitting corrosion", durch Beschichtungen gegen Korrosion (MCrAlX; M = Fe, Co, Ni, Seltene Erden) und Wärme (Wärmedämmschicht, beispielsweise Zr02, Y204-Zr02) geschützt. Die Beschichtung zur Hitzeabschirmung wird Thermal Barrier Coating bzw. kurz TBC genannt. Weitere Maßnahmen, um die Schaufeln hitzeresistenter zu machen, bestehen in ausgeklügelten Kühlkanalsystemen. Diese Technik wird sowohl in den Leit- als auch in den Laufschaufeln 120, 130 angewendet.

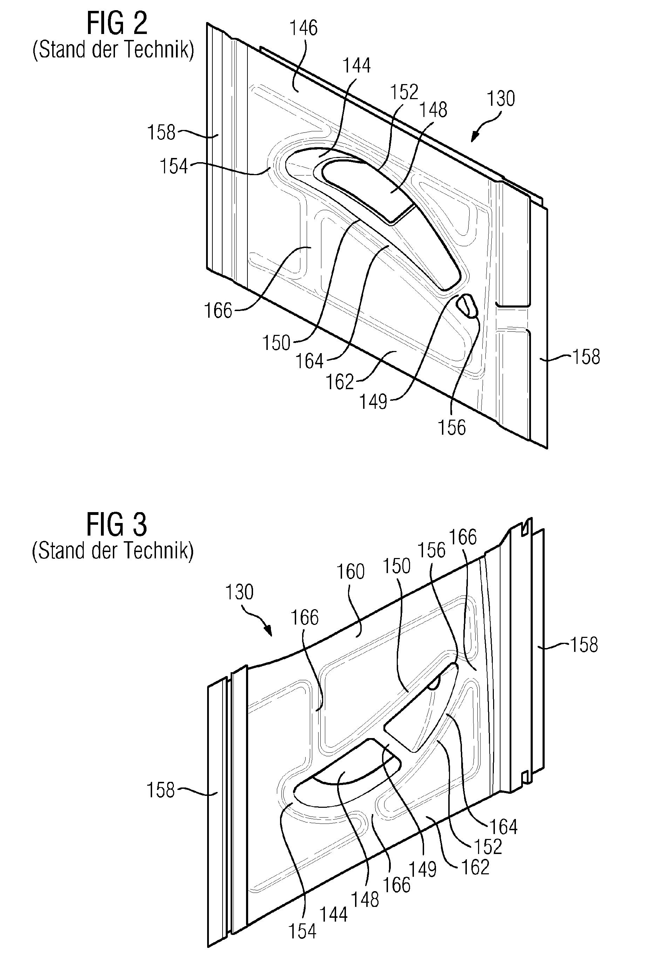

FIG 2 zeigt im Detail eine perspektivische Ansicht einer Leitschaufel 130 nach dem Stand der Technik aus einer ersten Längsrichtung des Schaufelblatts 144. Gezeigt ist die Leitschaufel 130 aus Sicht des Rotors 103. Die Leitschaufel 130 weist einen auch als Plattform 146 bezeichneten Leitschaufelkopf auf, der an einem Dichtring 140 des Stators 143 festgelegt ist. Jeder Dichtring 140 umschließt dabei die Welle des Rotors 103.

Das Schaufelblatt 144 ist tragflächenartig profiliert und hohl ausgestaltet. Es geht längsseitig in die Plattform 146 über und ist mit ihr einstückig gegossen. Die Plattform weist eine entsprechende Öffnung 148 auf, die den Hohlraum im Schaufelblatt 144 fortsetzt. Der Hohlraum ist dabei von einer Rippe 149 unterteilt.

Die Plattform 146 weist eine Grundfläche in der Außenkontur eines Parallelogramms auf, von der aus das Schaufelblatt 148 im Wesentlichen in der Normale der Grundfläche weg ragt. Das Schaufelblatt 148 ist dabei derart angeordnet, dass Druckseite 150, Saugseite 152, Profilnase 154 und Profilhinterkante 156 des Schaufelblatts 148 eindeutig auf eine Seite des Parallelogramms weisen. Auf den der Profilnase 154 und der Profilhinterkante 156 zugeordneten Seiten der Grundfläche sind Befestigungsschienen 158 angeordnet, die sich von der Plattform 146 aus in die entgegengesetzte Richtung wie das Schaufelblatt 148 erstrecken. Sie dienen der Befestigung der Leitschaufel 130 am Dichtring 140 in der Art einer Nut-Feder-Verbindung.

FIG 3 zeigt die Leitschaufel 130 in perspektivischer Ansicht aus der gegenüberliegenden Richtung., d. h. aus Sicht des Gehäuses 138. Gezeigt ist der dem Innengehäuse 138 der Turbine 108 zugewandte, ebenfalls als Plattform 160 bezeichnete Leitschaufelfuß. Der Leitschaufelfuß ist ebenso wie der Leitschaufelkopf ausgestaltet, d. h. das Schaufelblatt 144 geht auch hier längsseitig in die Plattform 160 über und ist mit ihr einstückig gegossen. Die Plattform 160 weist ebenfalls eine entsprechende Öffnung 148 auf, die den Hohlraum im Schaufelblatt 144 fortsetzt. Die den Hohlraum unterteilende Rippe 149 ist ebenfalls gezeigt.

Die Plattform 160 weist ebenso wie die Plattform 146 des Leitschaufelkopfes eine Grundfläche in der Außenkontur eines Parallelogramms auf, von der aus das Schaufelblatt 148 im Wesentlichen in der Normale der Grundfläche weg ragt. Auch hier ist die Grundfläche derart angeordnet, dass Druckseite 150, Saugseite 152, Profilnase 154 und Profilhinterkante 156 des Schaufelblatts 148 eindeutig auf eine Seite des Parallelogramms weisen. Analog sind auf den der Profilnase 154 und der Profilhinterkante 156 zugeordneten Seiten der Grundfläche Befestigungsschienen 158 angeordnet, die sich von der Plattform 146 aus in die entgegengesetzte Richtung wie das Schaufelblatt 148 erstrecken. Sie dienen hier der Befestigung der Leitschaufel 130 am Innengehäuse 138 in der Art einer Nut-Feder-Verbindung.

Die in FIG 2 und FIG 3 gezeigten Plattformen 146, 160 weisen auf der gezeigten Seite erhabene Strukturen. Diese umfassen zum einen eine äußere Randumfassung 162, die entlang der Außenkante des Parallelogramms umläuft (und damit auch teilweise die Befestigungsschienen 158 umfasst) und zum anderen eine weitere innere Randumfassung 164, die die Öffnung 148 umläuft. Weiterhin umfassen die erhabenen Strukturen Rippen 166, die die äußere Randumfassung 164 mit der inneren Randumfassung 162 verbinden.

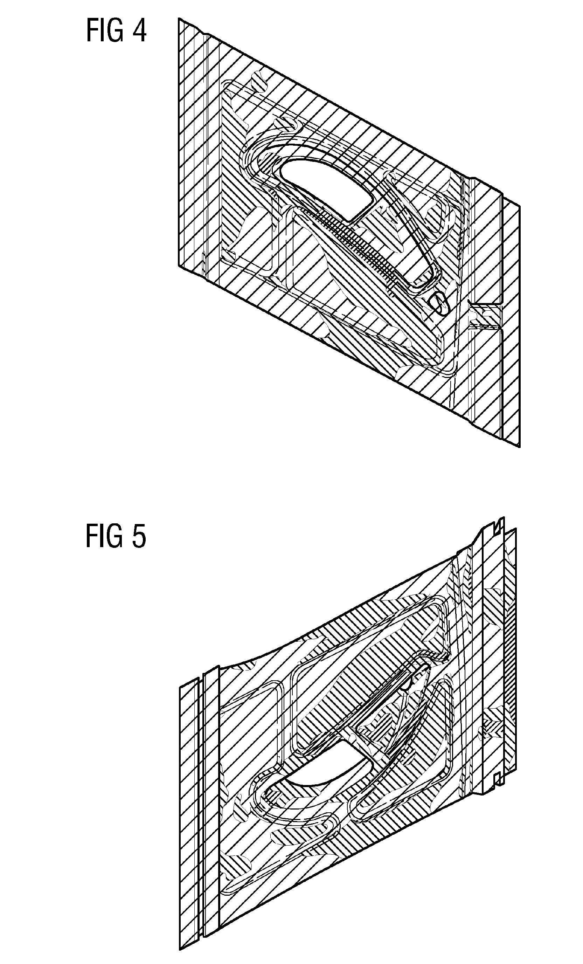

Die FIG 4 und die FIG 5 zeigen exakt die perspektivischen Ansichten aus FIG 2 und FIG 3. Allerdings sind hierbei aus Gründen der Übersicht die Bezugszeichen weggelassen, stattdessen sind in schraffierter Darstellung auf der Oberfläche die Spannungsbelastungen der Leitschaufel 130 dargestellt. Die Spannungsbelastungen wurden hierbei mittels Simulationen ermittelt. Die FIG 4 und FIG 5 zeigen, dass die Rippen 166 vergleichsweise große Kontaktkräfte weiterleiten, was im Randbereich der Öffnung 148, d. h. am Übergang von Plattform 146, 160 zu Schaufelblatt 144 zu hohen Spannungsbelastungen führt.

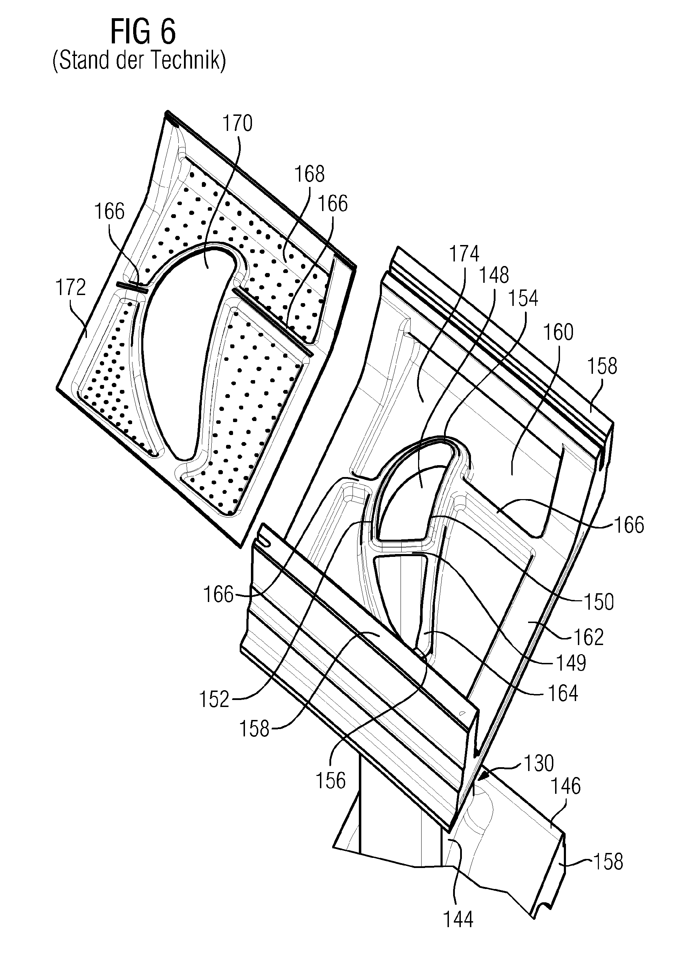

Die Spannungsbelastungen könnten durch ein Entfallen der Rippen 166 gemildert werden. Sie erfüllen jedoch einen Zweck, der in FIG 6 gezeigt ist. FIG 6 zeigt eine veränderte perspektivische Ansicht der Leitschaufel 130 aus einer ähnlichen Richtung wie in FIG 3 zusammen mit einer Prallplatte 168. Die Prallplatte 164 ist der Plattform 160 angeformt. Sie weist abzüglich der Ausdehnung der Befestigungsschienen 158 die gleiche parallelogrammartige Außenform auf. Sie weist weiterhin eine zur Öffnung 148 passgenaue Öffnung 170 auf.

In die Fläche der Prallplatte 168, die lediglich als dünnes Blech ausgestaltet ist, sind erhabene Strukturen 172 eingebracht, die exakt den Randumfassungen 162, 164 und den Rippen 166 entsprechen. Auf der der Plattform 160 zugewandten Seite der Prallplatte 168 sind diese im entsprechenden Negativ als Vertiefungen vorhanden. Die Prallplatte 168 wird passgenau auf die Plattform 160 gesetzt. Da die Höhe der Strukturen 172 geringer ist als die Höhe der Randumfassungen 162, 164 und der Rippen 166, verbleibt ein Hohlraum 174, der von der Prallplatte 168, der Plattform 160 und den Randumfassungen 162, 164 begrenzt wird. Durch die Rippen 166 wird dieser Hohlraum in Kammern unterteilt, bei dem Leitschaufelfuß der FIG 6 in insgesamt drei. Andere Konfigurationen sind jedoch denkbar.

Entsprechend ist der Leitschaufelkopf mit einer entsprechenden Prallplatte 168 ausgestattet. Gleiches gilt für den Laufschaufelfuß. Die Prallplatte 168 dient dabei zur Prallkühlung: Dabei wird der Kühlluftstrom durch eine Vielzahl von Bohrungen in der Prallplatte 168 in den Hohlraum und damit auf die zu kühlende Plattform 160 geblasen. Beim Aufprall dieses Strahls wird die Kühlluft vom Aufprallpunkt aus nach allen Seiten parallel zur Aufprallfläche umgelenkt. Dabei wird eine hohe Kühlwirkung erzielt. Die Unterteilung in Kammern durch die Rippen 166 dient dazu, eine Vermischung von Kühlluft innerhalb des Hohlraums 174 dabei zu vermeiden, so dass stark belastete Bereiche ausreichend gekühlt werden.

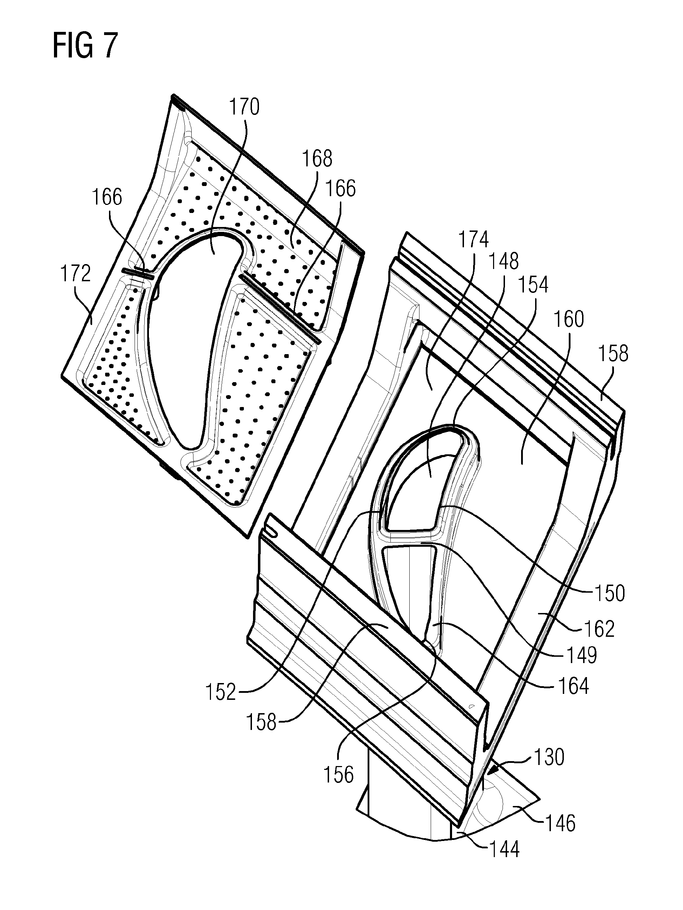

FIG 7 zeigt eine Lösung dieses Problems. Es ist eine perspektivische Ansicht einer Leitschaufel 130 zusammen mit einer Prallplatte 168. FIG 7 zeigt eine identische Ansicht zu FIG 6, die gezeigten Bauteile sind jedoch verändert und werden nur anhand der Unterschiede zur FIG 6 erläutert. Gegenüber der Leitschaufel aus FIG 6 sind bei der Leitschaufel aus FIG 7 die Rippen 166 entfallen, die den Hohlraum 174 unterteilen. Die durch die Randumfassungen 162, 164 gebildete Mulde ist also zunächst einteilig. Darüber hinaus ist die Leitschaufel 130 unverändert.

Die Prallplatte 168 weist immer noch der Randumfassungen 162, 164 entsprechende Strukturen 172 auf. Anstelle der Strukturen 172 aus FIG 6, die den Rippen 166 angeformt waren, sind die Rippen 166 nun direkt in die Prallplatte 168 eingebracht. Sie sind auf der gegenüberliegenden Seite der Strukturen 172 erhaben, d. h. auf der der Plattform 160 zugewandten Seite. Ihre Formgebung entspricht exakt der der Rippen 166 aus der FIG 6, nur dass sie hier nicht in die Leitschaufel 130 gegossen sind, sondern in die Prallplatte 168 geprägt. Beim Einsetzen der Prallplatte 168 in die Leitschaufel 130 ergibt sich also eine identische Geometrie, so dass die kühllufttrennende Wirkung der Rippen 166 erhalten bleibt, aber dennoch die Zugbelastungen reduziert werden.

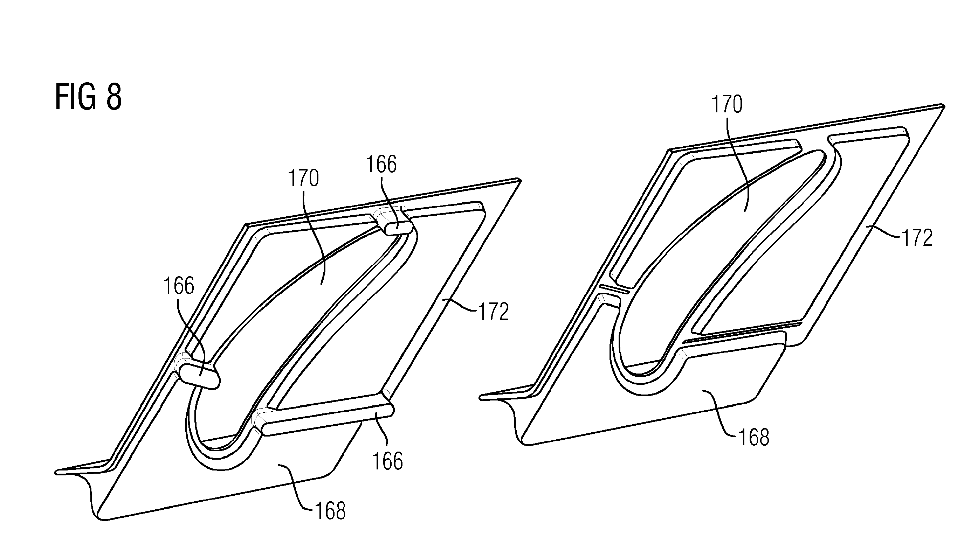

FIG 8 zeigt noch einmal eine perspektivische Ansicht einer Prallplatte 168 nach dem Stand der Technik aus FIG 6 zusammen mit einer Prallplatte 168 mit Rippen 166 nach FIG 7. Die Prallplatten 168 sind so gezeigt, dass die der Plattform 160 zugewandte Seite sichtbar ist. FIG 8 zeigt bei der linken Prallplatte 168 deutlich die erhabenen Rippen 166.

Eine entsprechende Ausgestaltung ist nicht nur beim Leitschaufelfuß, sondern auch beim Leitschaufelkopf und beim Laufschaufelfuß denkbar. Besonders vorteilhaft ist sie in den stark belasteten, der Brennkammer 106 direkt folgenden Turbinenstufen 112.

## Patentansprüche

1. Turbinenschaufel (120, 130) für eine Turbine (100) mit einer Plattform (146, 160), an der ein im Querschnitt profiliertes Schaufelblatt (144) angeordnet ist,
wobei auf der dem Schaufelblatt (144) abgewandten Seite der Plattform (146, 160) ein Hohlraum (174) gebildet ist, der von der Plattform (146, 160), einer im Wesentlichen parallel dazu angeordneten Prallplatte (168) und einer Randumfassung (162, 164) begrenzt ist,
wobei der Hohlraum (174) durch eine Rippe (166) unterteilt ist,
**dadurch gekennzeichnet, dass**
die Rippe (166) ein Teil der Prallplatte (168) ist.

2. Turbinenschaufel (120, 130) nach Anspruch 1,
bei der die Rippe (166) mit der Prallplatte (168) einstückig ausgebildet ist.

3. Turbinenschaufel (120, 130) nach einem der vorhergehenden Ansprüche,
bei der alle den Hohlraum (174) unterteilenden Rippen (166) Teil der Prallplatte (168) sind.

4. Turbinenschaufel (120, 130) nach einem der vorhergehenden Ansprüche,
bei der die Randumfassung (162, 164) ein Teil der Turbinenschaufel (120, 130) ist.

5. Turbinenschaufel (120, 130) nach einem der vorhergehenden Ansprüche,
bei der die Randumfassung (162, 164) mit der Turbinenschaufel (120, 130) einstückig ausgebildet ist.

6. Turbinenschaufel (120, 130) nach einem der vorhergehenden Ansprüche,
bei der die Turbinenschaufel (120, 130) als Leitschaufel (130) ausgebildet ist.

7. Stator (143) oder Rotor (103) für eine Turbine (100) mit einer Turbinenschaufel (120, 130) nach einem der vorhergehenden Ansprüche.

8. Stator (143) oder Rotor (103) nach Anspruch 7,
bei dem die Turbinenschaufel in der der Brennkammer (106) am nächsten liegenden Schaufelreihe (115, 125) zugeordnet ist.

9. Turbine (100) mit einem Stator (143) und/oder Rotor (103) nach Anspruch 9.

10. Turbine (100) nach Anspruch 9,
die als Gasturbine (100) ausgelegt ist.

11. Kraftwerksanlage mit einer Turbine (100) nach Anspruch 9 oder 10.
